# EUROPEAN PATENT SPECIFICATION

(11) **EP 4 275 464 B1**
(45) Date of publication and mention of the grant of the patent: **18.12.2024**
(21) Application number: 23171094.8
(22) Date of filing: 02.05.2023
(51) Int. Cl.: A01B 45/00, E01H 1/05

(54) **MACHINE FOR DECOMPACTING SYNTHETIC GRASS LAWNS**
MASCHINE ZUM DEKOMPAKTIEREN VON KUNSTRASEN
MACHINE POUR DÉCOMPACTER DES PELOUSES SYNTHÉTIQUES

(30) Priority: 12.05.2022 IT 202200009806
(43) Date of publication of application: 15.11.2023
(73) Proprietor: Eurosystems S.p.A., 42045 Luzzara (Reggio Emilia) (IT)
(72) Inventor: BOVI, Fabio, 42045 LUZZARA (RE) (IT)
(74) Representative: Corradini, Corrado

(56) References cited:
- WO-A2-2016/042383
- DE-A1- 4 408 247
- FR-A1- 2 858 780
- JP-A- H04 309 606

## Description

### Field of the art

The present invention relates to a machine for decompacting synthetic grass lawns, for example but not necessarily synthetic grass lawns intended for use as playing fields (e.g. for playing football, tennis or for other sporting activities).

### State of the art

It is known that synthetic grass lawns generally consist of a bottom substrate, for example made of non-woven fabric, from which the synthetic fibres suitable for simulating grass filaments project, and of an inconsistent filling material that occupies the gaps among said fibres.

The filling material may be formed of grains of sand, rubber, or of other material that are distributed over the bottom substrate, forming layers having a thickness normally ranging from 3 to 5 centimetres.

This filling material is very important as it significantly influences the physical characteristics of the lawn, e.g. the elasticity thereof, on which the technical-sporting qualities, such as the dynamics with which game balls or small balls bounce on it, depend.

However, prolonged use and trampling produced by the users lead to a progressive compaction of the filling material on the bottom substrate, thereby forming increasingly rigid layers that modify the physical characteristics of the lawn, making it, for example, less elastic.

As a result, the bounce dynamics of a ball or small ball can vary progressively and sometimes reach conditions that make the lawn no longer suitable for use as a playing field. The document FR2858780 describes a device which can ensure superficial removal of waste without damaging the fluff of carpet constituting the synthetic floor. The screen is subjected to forced oscillations when the brush is driven, thus avoiding accumulation of rubber granules on the screen and favoring waste outflow towards the recovery tub.

### Disclosure of the invention

In light of the foregoing, an object of the present invention is to make available a machine that allows a synthetic grass lawn to be "decompacted", making it at least partially recover its original physical characteristics.

Another object is that of achieving the aforesaid objective within the context of a simple, rational and relatively cost effective solution.

These and other objects are reached thanks to the characteristics of the invention as set forth in the independent claim 1. The dependent claims 2-20 outline preferred and/or particularly advantageous aspects of the invention but not strictly necessary for implementing it.

In particular, one embodiment of the present invention makes available a machine for decompacting synthetic grass lawns comprising at least:
- a support frame provided with supporting members (e.g. wheel) adapted to allow said support frame to advance on the lawn in an advancement direction,
- a scarifier roller installed on board the support frame, which is adapted to stay in contact with the lawn and is adapted to rotate on itself around a rotation axis that is horizontal and orthogonal to the advancement direction,
- an oscillating brush installed on board the support frame, to the rear of the scarifier roller with respect to the advancement direction, which is adapted to stay in contact with the lawn and is adapted to make reciprocating movements along an oscillation direction parallel to the rotation axis of the scarifier roller, and
- motor means adapted to drive the rotation of the scarifier roller and the oscillation of the oscillating brush.

Thanks to this solution, the scarifier roller is able to break up the compacted layer of filling material, by lifting and projecting upwards the grains of which it is made (for example of sand and rubber), which then emerge from the gaps among the synthetic fibres and tend to deposit again on the surface.

The subsequent action of the oscillating brush allows these grains to be redistributed among the synthetic fibres and returned inside the turf without however recompacting them.

In this way, the combined action of the scarifier roller and of the oscillating brush allows to effectively decompact the synthetic grass lawn, restoring at least part of its original characteristics, easily, quickly and with little effort for the user.

According to one aspect of the invention, the scarifier roller may comprise a rotor and a plurality of metallic prongs (or claws) adapted to stay in contact with the lawn, which are associated with said rotor so as to protrude radially with respect to the rotation axis.

In this way, the metallic prongs scrape the compacted layer of the filling material, separating any aggregate grains and projecting them upwards.

In particular, the rotor may comprise two heads that are mutually opposed along the direction of the rotation axis of the scarifier roller and a plurality of connection bars that are eccentrically fixed to said heads, which can extend helically with respect to the rotation axis and are adapted to carry the aforesaid metallic prongs.

This aspect of the invention provides a particularly effective solution for realizing the scarifier roller.

Each metallic prong preferably consists of a bending spring, which can be partially spirally wound around a respective connection bar.

In this way, when coming into contact with the lawn, the metallic prongs can bend elastically, allowing an effective abrasion of the compacted layers of filling material, without however causing rippings or tears of the synthetic fibre substrate.

Another aspect of the invention provides that the machine may comprise adjustment means adapted to adjust and lock the scarifier roller on the support frame at different operating positions which correspond to different distances (heights) of the scarifier roller from the lawn.

Thanks to this solution, it is advantageously possible to vary the depth with which the scarifier roller penetrates into the synthetic turf depending on the need.

For example, this penetration may be increased in cases where the synthetic grass is rather high, while it may be decreased in cases where the synthetic grass is lower.

To achieve this adjustment, the support frame may comprise a first rigid frame and a second rigid frame, wherein the first rigid frame is adapted to rotate, with respect to the second rigid frame, around an articulation axis parallel to the rotation axis of the scarifier roller, the scarifier roller being installed on board the first rigid frame and the adjustment means being adapted to produce the rotation of the first rigid frame with respect to the second rigid frame around the aforesaid articulation axis and to lock them at multiple different mutual angular positions.

This provides a very effective solution for adjusting the height of the scarifier roller, while remaining within the framework of a relatively simple and economical construction structure.

In particular, the articulation axis between the first rigid frame and the second rigid frame can simply be defined by the common axis of a pair of mutually coaxial wheels (e.g. drive wheels), which are mounted on the first rigid frame to support it resting on the lawn.

The adjustment means may then comprise a lever, which is pivoted to the second rigid frame and is connected to the first rigid frame in a position spaced apart with respect to the articulation axis.

Thanks to this solution, the height adjustment of the scarifier roller can be carried out easily and with relatively little effort.

Moving to the oscillating brush, the latter may comprise a support bar and a plurality of flexible bristles, e.g. made of plastic and/or polymer material, which project from a lower surface of said support bar to stay in contact with the lawn.

According to one aspect of the invention, the machine may comprise adjustment means for adjusting and locking the oscillating brush on the support frame at different operating positions which correspond to different distances of the oscillating brush with respect to the lawn.

In this way, the oscillating brush can also be adjusted in height according to the characteristics of the lawn to be treated, generally in order to ensure greater penetration when the synthetic grass is rather high and to reduce penetration when the synthetic grass is lower.

To achieve this adjustment, the oscillating brush can be installed on a tilting support, which is connected to the support frame by means of an articulation system that enables it to rotate around a hinge axis parallel to the rotation axis of the scarifier roller and spaced apart from the oscillating brush, the adjustment means being adapted to rotate the tilting support with respect to the support frame and to lock it at multiple different angular positions.

This provides a very effective solution for adjusting the height of the oscillating brush, while remaining within the framework of a relatively simple and economical construction structure.

In particular, the adjustment means may comprise one or more brackets that are integral with the tilting support, each of which is provided with an upper flap adapted to surmount a portion of the support frame, and one or more screws, each of which is screwed into a through hole obtained in the upper flap of a respective bracket, so as to have a lower end adapted to rest on the underlying portion of the support frame.

According to another aspect of the invention, the oscillating brush can be connected to the tilting support by means of a plurality of connecting rods arranged in such a way as to define an articulated parallelogram mechanism.

Thanks to this type of mechanism, a solid and reliable solution is provided to allow the oscillating brush to make reciprocating movements in the transverse direction.

According to another aspect of the invention, the machine may also comprise a second brush installed on board the support frame, which is adapted to stay in contact with the lawn to the rear of the oscillating brush with respect to the advancement direction.

This second brush has the function of "combing" the synthetic grass lawn after the latter has been treated with the scarifier roller and with the oscillating brush, smoothing it out and helping to evenly distribute the grains of sand and/or other filling material.

Even this second brush may comprise a support bar and a plurality of flexible bristles, e.g. made of plastic and/or polymer material, which project from a lower surface of said support bar to stay in contact with the lawn.

The second brush can also be additionally installed on a tilting support, which is connected to the support frame by means of an articulation system that enables it to rotate around a hinge axis parallel to the rotation axis of the scarifier roller and spaced apart from the second brush, for example around a hinge axis coinciding with the articulation axis of the tilting support of the oscillating brush.

In this way, the second brush can make relative displacements with respect to the support frame in the vertical direction, adapting to the height and shape of the synthetic grass lawn.

In fact, unlike to what concerns the oscillating brush, it is not provided for the machine to comprise adjustment means adapted to adjust and lock the position at height of the second brush, which is therefore adapted to rest (weigh down) on the lawn by its own weight.

According to another aspect of the invention, the motor means (those adapted to drive the scarifier roller and the oscillating brush) can generally comprise a motor, for example an endothermic motor or an electric motor, and a transmission system adapted to transmit the motion of said motor both to the scarifier roller and to the oscillating brush.

Thanks to this solution, a single motor is effectively able to drive both motorised tools of the machine.

As far as the scarifier roller is concerned, said transmission system may comprise a toothed wheel keyed to the scarifier roller, a worm screw meshing with the toothed wheel, and a mechanism, for example with belt/belts and pulleys, adapted to transmit the rotation of the motor to the worm screw.

As far as the oscillating brush is concerned, the transmission system may comprise a thrust crank mechanism, a rotating shaft adapted to rotate a crank of said thrust crank mechanism, and a mechanism, for example with belt/belts and pulleys, adapted to transmit the rotation of the motor to said rotating shaft.

In this context, the rotating shaft and the crank of the thrust crank mechanism can be connected via a telescopic bar, so as to follow any vertical displacements of the oscillating brush with respect to the support frame.

According to another aspect of the invention, the machine may also comprise motorised traction means adapted to drive the displacement of the support frame on the lawn.

Thanks to this solution, the machine is configured as a self-propelled machine.

The traction means may comprise for example one or more drive wheels and a motor, for example an endothermic motor or an electric motor, which is installed on board the support frame and is adapted to rotate said drive wheels.

In particular, said motor may be the same one that is also used to drive the scarifier roller and the oscillating brush.

In this way, a single motor is effectively able to guarantee the total operation of the machine.

Another aspect of the invention provides that the machine can also comprise one or more handles adapted to allow to guide the support frame on the lawn.

### Brief description of the drawings

Further features and advantages of the invention will be more apparent after reading the following description provided by way of non-limiting example, with the aid of the figures illustrated in the accompanying drawings.
Figure 1 is an axonometric view of a machine according to an embodiment of the present invention.
Figure 2 is a top plan view of the machine of Figure 1.
Figure 3 is a bottom plan view of the machine of Figure 1.

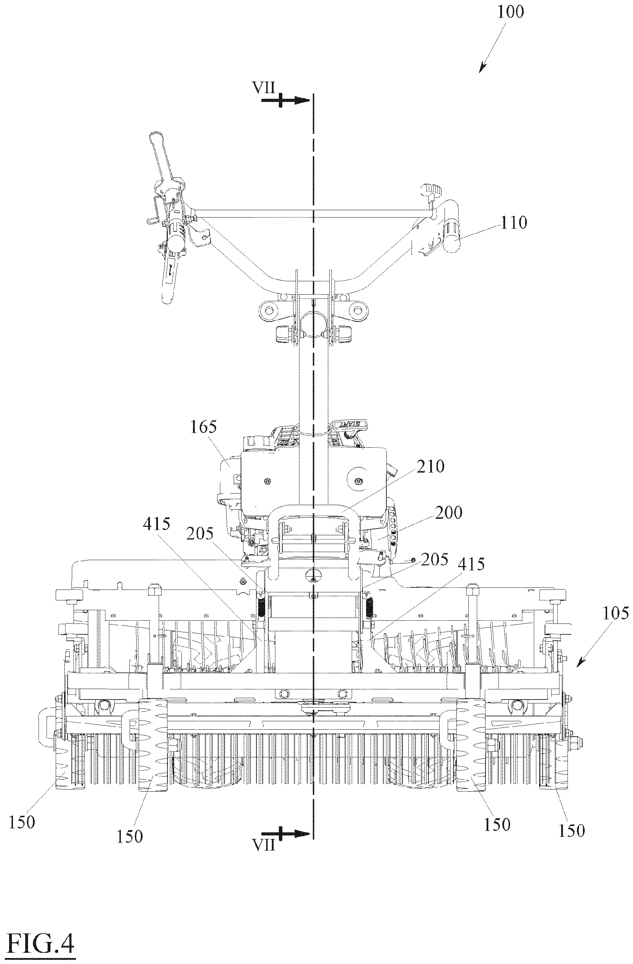

Figure 4 is a rear view of the machine of Figure 1.
Figure 5 is a side view of the machine of Figure 1.

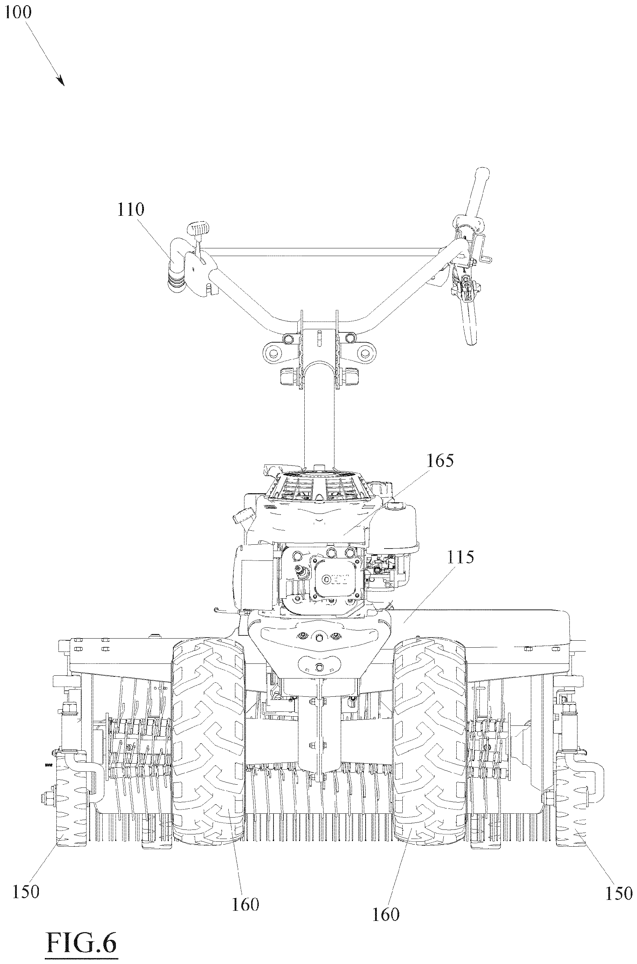

Figure 6 is a front view of the machine of Figure 1.
Figure 7 is the section VII-VII indicated in Figure 4 in which parts of the front frame 115 have been removed for the sake of clarity.
Figure 8 is the section VIII-VIII indicated in Figure 7.
Figure 9 is the section IX-IX indicated in Figure 7.
Figure 10 is an enlarged detail of Figure 9.
Figure 11 is the view indicated with arrow XI in Figure 10, shown on a reduced scale.
Figure 12 is the section XII-XII indicated in Figure 10 shown on a reduced scale.

### Detailed description

The above-mentioned figures show a machine 100 to decompact synthetic grass lawns, e.g. those intended for practising sports activities such as football games.

With regard to the conformation of the synthetic grass lawns, reference is made to what is outlined in the introduction.

The machine 100 is adapted to perform its function by moving on the lawn in a predetermined advancement direction, which can be modified following a steering phase.

In the illustrated example, the machine 100 is adapted to be driven by an operator walking behind it but it is not excluded that, in other embodiments, the machine 100 could be configured as a man-overboard machine, i.e. adapted to be driven by an operator who is on board the machine 100 itself.

In describing the machine 100, some terms will be used in the following and it is considered appropriate to provide some preliminary clarification.

In particular, terms such as "horizontal" and "vertical" are generally understood to refer to the lawn on which the machine 100 is placed and is adapted to advance during operation.

Thus, the term "horizontal" generally indicates an orientation parallel to the lawn, while the term "vertical" generally indicates an orientation perpendicular to the lawn.

The terms "front" and "rear" are used with reference to the advancement direction of the machine 100.

The term "longitudinal" generally refers to an orientation that is horizontal and parallel to the advancement direction of the machine 100, while the term "transverse" generally refers to an orientation that is horizontal and orthogonal to the advancement direction of the machine 100.

The terms "right" and "left" are understood to refer to a median vertical plane, parallel to the advancement direction of the machine 100 and passing substantially through the centreline of the latter, relative to an observer facing the advancement direction.

Returning to the machine 100, it comprises a support frame, referred to globally as 105, which is generally provided with supporting members adapted to support it and to allow its displacements on the lawn.

In the example illustrated, these supporting members consist of wheels but it is not excluded that, in other embodiments, one or more of these wheels may be replaced by other supporting members, such as tracks or other.

Preferably, one or more of these supporting members can be motorised, so that traction means can also be defined which are adapted to drive the displacements of the support frame 105 on the lawn, effectively realizing a self-propelled machine 100.

For the machine 100 to be guided, the latter can be provided with a handlebar or a pair of handles 110 that are fixed to the support frame 105 and are adapted to be grasped by the user.

Going into more detail, the support frame 105 can be composed of two mutually connected rigid frames, of which a front frame 115 and a rear frame 120.

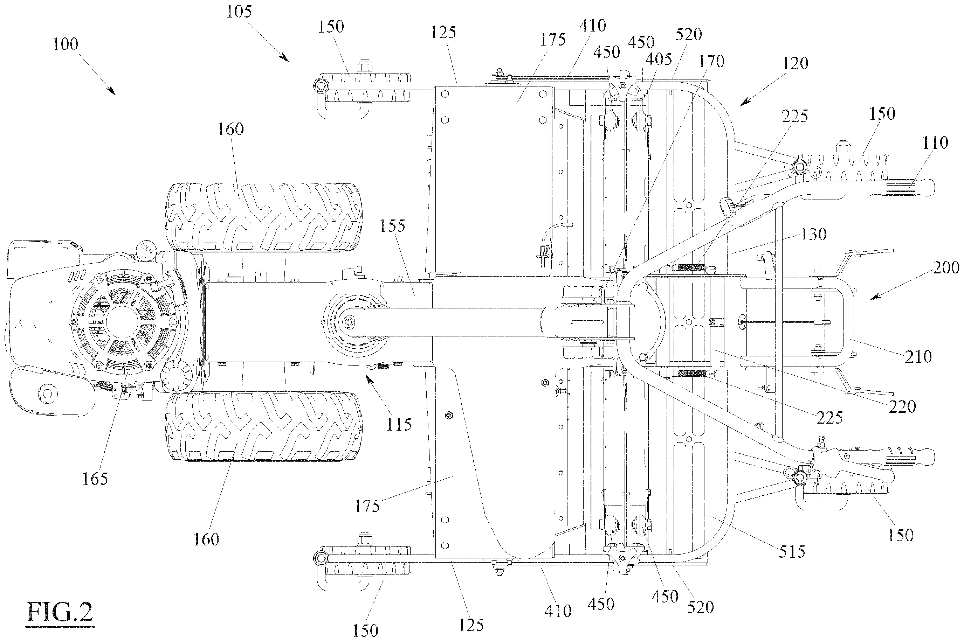

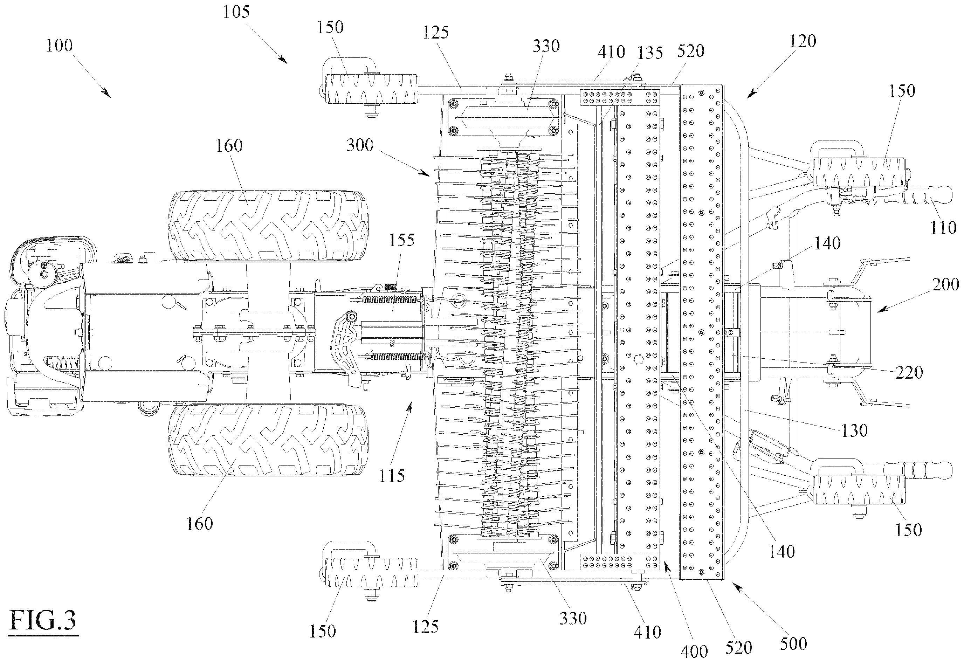

As can be seen more clearly in Figures 2 and 3, the rear frame 120 can substantially have a U-shaped conformation, lying in a horizontal plane, comprising two parallel and mutually opposed longitudinal arms 125 and a transverse arm 130 positioned to connect the rear ends of the two longitudinal arms 125.

The two longitudinal arms 125 are preferably positioned equidistant, respectively to the right and to the left, with respect to the median vertical plane of the machine 100.

The longitudinal arm 125 and the transverse arm 130 can be made in one piece, e.g. by bending a single bar of metallic material.

The rear frame 120 may additionally comprise a transverse stiffening bar 135 (see Fig. 3), which is oriented parallel to the transverse arm 130 and is positioned to connect (e.g. by welding) the longitudinal arms 125 to each other, standing in an intermediate position between the transverse arm 130 and the front ends of the longitudinal arms 125 themselves.

The transverse stiffening bar 135 can be further connected (e.g. welded) to the transverse arm 130 by means of two further longitudinal stiffening bars 140, which are oriented parallel to the longitudinal arms 125.

These longitudinal stiffening bars 140 are also preferably positioned equidistant, respectively to the right and to the left, with respect to the median vertical plane of the machine 100.

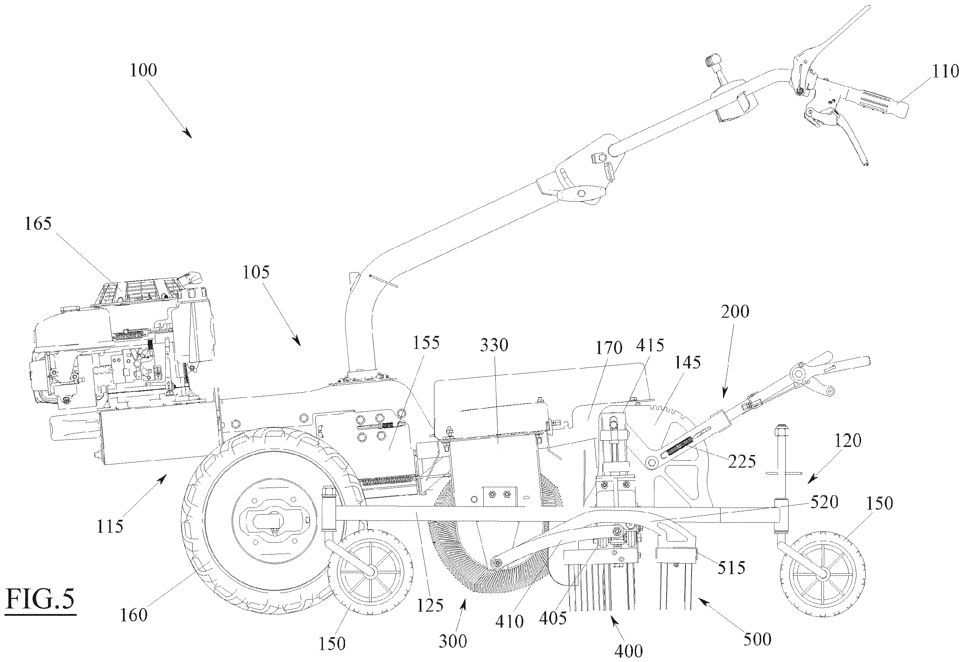

As can be seen in Figures 5, 7, 9 and 10, the rear frame 120 can also comprise two containment plates 145 that rise vertically with respect to its lying plane.

These containment plates 145, which lie in vertical planes parallel to the advancement direction, are mutually opposed and spaced apart from each other in the transverse direction.

Preferably, these two containment plates 145 are also positioned equidistant, respectively to the right and to the left, with respect to the median vertical plane of the machine 100.

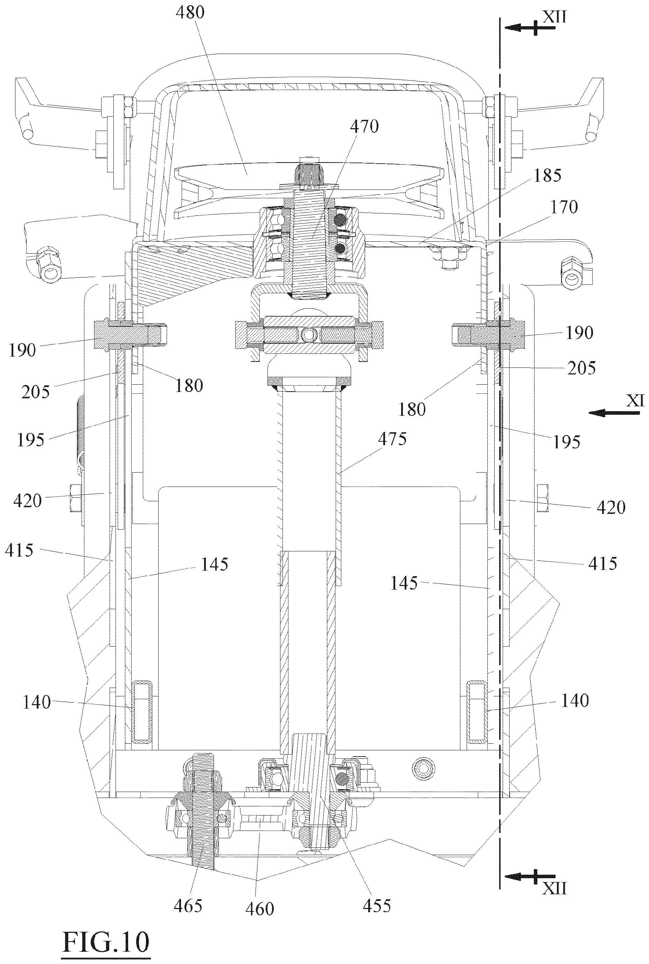

For example, each containment plate 145 can be fixed (e.g. welded) to a respective longitudinal stiffening bar 140 of the rear frame 120 (see Fig. 10).

The rear frame 120 can be adapted to rest stably on the lawn, possibly by means of an isostatic or more preferably hyperstatic type support.

For example, in the embodiment illustrated, the rear frame 120 is provided with four supporting and resting wheels 150, of which one wheel 150 connected to the front end of each longitudinal arm 125 and two wheels 150 fixed rearwardly to the transverse arm 130.

The wheels 150 are preferably idle (non-motorised) wheels and can be pivoting according to respective vertical axes, so as to allow/facilitate steering the machine 100.

The front frame 115 comprises a central body 155 generally tapered in shape and extending predominantly in a longitudinal direction.

This central body 155 can be realized by means of bent and/or welded metal sheets, which can give it a relatively complex structure.

Two wheels 160 can be associated with this central body 155 which are adapted to support it while resting on the lawn and which have the same diameter and are positioned mutually coaxial, with axis that is horizontal and orthogonal to the advancement direction.

In particular, the wheels 160 can be positioned equidistant, respectively to the left and to the right, with respect to the vertical median plane of the machine 100, e.g., by being located on opposite sides of the central body 155 of the front frame 115.

The wheels 160 can be driven by a motor 165, e.g. an endothermic (internal combustion) motor or an electric motor, typically through an appropriate transmission system possibly provided with a gearbox.

In this way, the wheels 160 are drive wheels, defining the already mentioned traction means of the machine 100.

Preferably, the wheels 160 are arranged near the front end of the central body 155.

As illustrated in Figure 2, between the wheels 160 and a rear end 170 of the central body 155, the front frame 115 may comprise two lateral wings 175, which project transversely, respectively to the right and to the left, with respect to the central body 155.

Each of these lateral wings 175 can be made of a metal sheet body, possibly shaped so as to make it stiffer, which is fixed in a cantilevered manner (e.g. welded and/or bolted) to a respective sidewall of the central body 155.

The two lateral wings 175 can be specular to each other with respect to the vertical plane of the centreline of the machine 100.

The rear end 170 of the central body 155 can be connected to the rear frame 120.

In particular, the rear end 170 of the central body 155 can be completely constrained to the rear frame 120 in the transverse and longitudinal direction, but can be provided with a degree of freedom in the vertical direction.

Thus, by lifting or lowering the rear end 170 of the central body 155, a relative rotation of the front frame 115 is achieved with respect to the rear frame 120 around the axis of the two wheels 160, which acts as the axis of mutual articulation.

To be more specific (see, for example, Figure 10), the rear end 170 of the central body 155 may be square in shape and have two vertically lateral sidewalls 180, oriented and mutually opposed, joined together by a transverse flap 185.

The lateral sidewalls 180 can be interposed, substantially to size, between the two containment plates 145 of the rear frame 120, so as to prevent mutual displacements in the transverse direction.

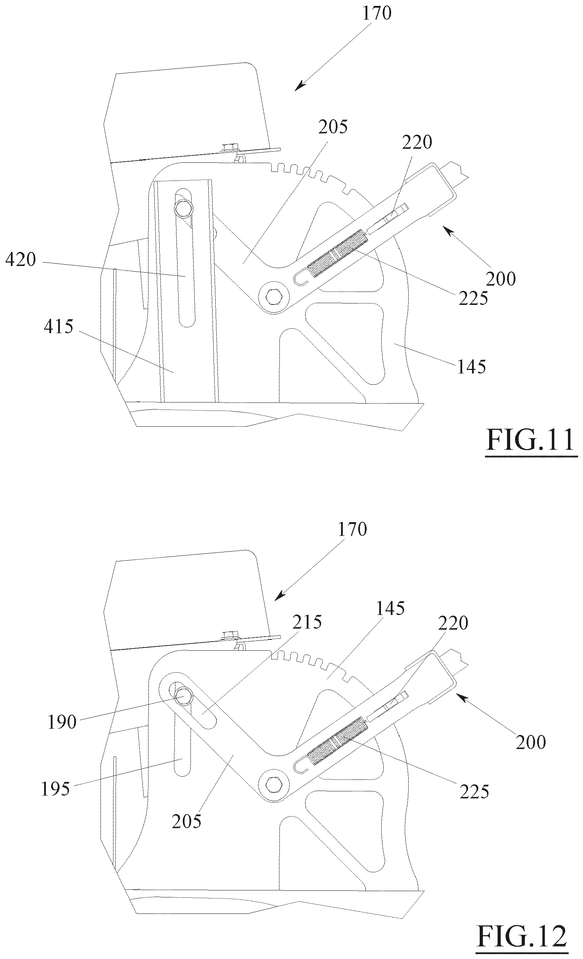

A transverse pin 190 can also be stably fixed to each lateral sidewall 180 and which, by projecting outwards (i.e. from the opposite side with respect to the other sidewall), can be slidably inserted into a guide slot 195, preferably rectilinear and oriented vertically, which is obtained in the adjacent containment plate 145 (see also Figure 12).

In this way, the coupling between the transverse pins 190 and the respective guide slots 195 prevents mutual displacements of the front frame 115 and of the rear frame 120 in the longitudinal direction but allows, as anticipated, some displacement in the vertical direction.

This displacement can be operated and controlled by means of a lever 200, which can be pivoted to the rear frame 120 according to a pivot axis parallel to the articulation axis defined by the wheels 160.

Preferably, the lever 200 is L-shaped and the pivot axis is placed at the elbow.

As clearly visible in Figure 12, the lever 200 may thus have a front end coupled with the rear end 170 of the front frame 115 and a rear end adapted to be grasped and moved manually by a user.

In particular, the front end of the lever 200 can be coupled to the rear end 170 of the front frame 115, so as to allow both mutual rotations along an axis parallel to the pivot axis and mutual displacements in a radial direction (with respect to the pivot axis).

Thus, through a clockwise rotation of the lever 200 (with reference to Figure 12) a vertical lifting of the rear end 170 of the front frame 115 can be obtained; conversely, through a counterclockwise rotation of the lever 200 a vertical lowering of the rear end 170 of the front frame 115 can be obtained.

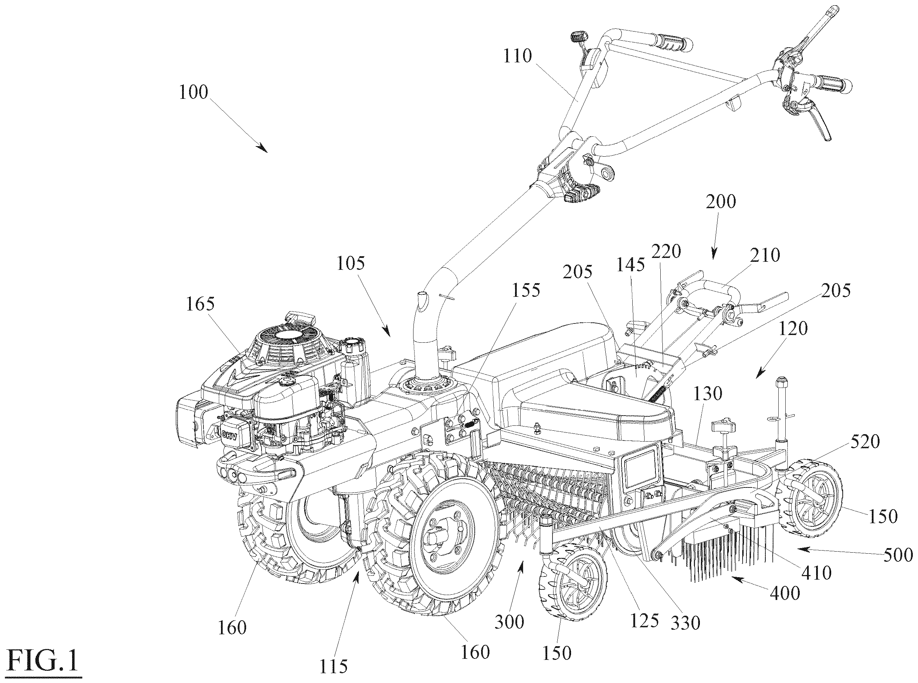

Going into more detail, the Lever 200 can consist of two shaped plates 205, which can be identical to each other, mutually spaced apart and specularly opposed in the transverse direction (see also Figure 1 and Figure 10).

The rear ends of these shaped plates 205 can be joined by a transverse metal sheet, to which a handle 210 adapted to be grasped by the user can be fixed.

The two shaped plates 205 may be inserted, substantially to size, on the containment plates 145 of the rear frame 120, so that each shaped plate 205 is positioned substantially in contact with the outer surface of a respective containment plate 145.

Each shaped plate 205 can then be pivoted to the containment plate 145 adjacent to it by means of a hinge pin positioned at the elbow and defining the pivot axis.

The front arms of each shaped plate 205 may be provided with a slot 215 (see Figure 12), preferably rectilinear and extending radially with respect to the pivot axis, within which the transverse pin 190 which is fixed to the adjacent lateral sidewall 180 of the rear end 170 of the front frame 115 is slidably accommodated.

In this way, the rotation of the two shaped plates 205 causes the two transverse pins 190 (and thus the rear end 170 of the front frame 115) to be lifted or lowered, which can slide both along the guide slots 195 of the containment plates 145 and along the slots 215 of the shaped plates 205.

The lever 200 is further associated with locking means adapted to lock the front frame 115 and the rear frame 120 at different relative angular positions, i.e. to lock the rear end 170 of the front frame 115 with respect to the rear frame 120 at different heights.

In the illustrated example, these locking means are configured as a guillotine system comprising a blade 220 (see Figures 1 and 2), which is oriented transversely between the two shaped plates 205 and is slidably coupled to the latter, so as to be adapted to slide in the radial direction with respect to the pivot axis.

For example, the opposite ends of the blade 220 may be accommodated and possibly project into corresponding rectilinear slots obtained in the rear arms of the shaped plates 205.

Spring-loaded means can then be provided for pulling the blade 220 towards the lever axis.

These spring-loaded means may comprise, for example, two springs 225 that are individually placed under traction between a respective projecting end of the blade 220 and a fixed pin (not illustrated) projecting from the shaped plate 205 adjacent to it, for example but not necessarily to the hinge pin.

In this way, the blade 220 is constantly pressed against the edges of containment plate 145.

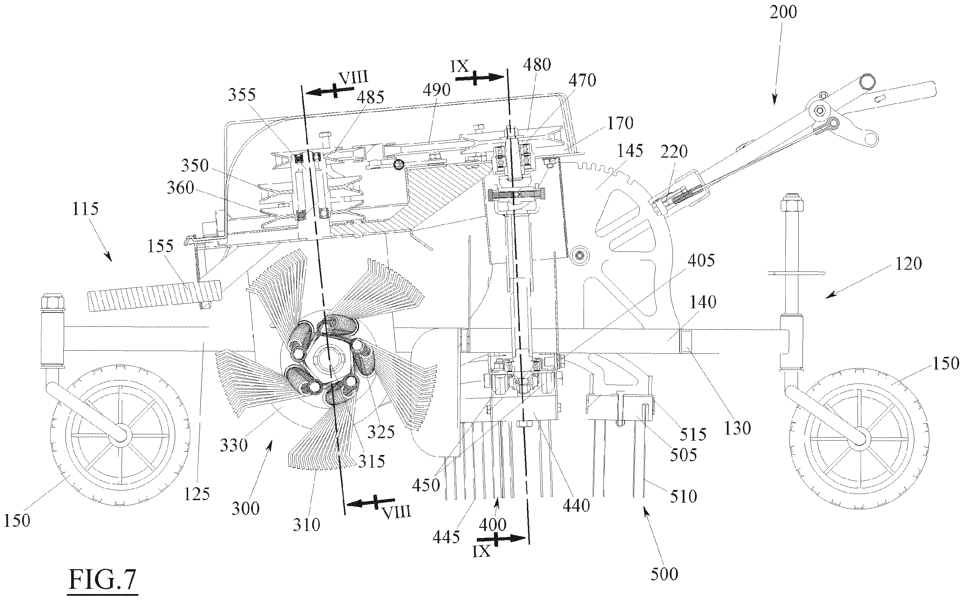

These edges, which may have an arched shape, may have a plurality of radial notches (see Figures 5 and 7) in which the blade 220, dragged by the spring-loaded means, may get interlocked for different angular positions of the shaped plates 205 and, therefore, for different heights of the rear end 170 of the front frame 115, preventing any further rotation.

In order to release the blade 220 from these notches, a gripping element can be arranged on the handle 210 which, by means of a connecting cable, allows the users to manually pull the blade 220 in contrast to the action of the spring-loaded means.

The machine 100 further comprises a plurality of tools, which are installed on board the support frame 105 so as to be adapted to treat the synthetic grass lawn on which the machine 100 moves.

These tools comprise a scarifier roller 300, which is adapted to stay in contact with the synthetic grass lawn and to rotate on itself around a transverse rotation axis (i.e. horizontal and orthogonal to the advancement direction).

In this way, the scarifier roller 300 is generally adapted to break up the compacted layer of filling material, by lifting and projecting upwards the grains of which it is composed (e.g. sand and rubber), thus causing them to escape from the gaps among the synthetic fibres and allowing them to deposit on the surface.

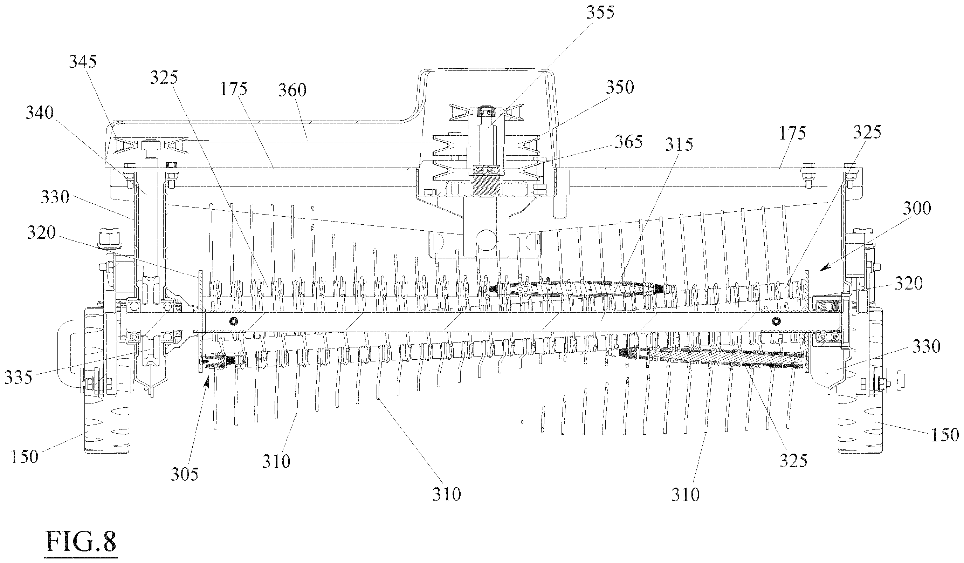

As can be seen in Figure 8, the scarifier roller 300 may comprise a rotor 305 and a plurality of metallic prongs (or claws) 310 adapted to stay in contact with the lawn, which are associated with said rotor 305 so as to protrude radially with respect to the rotation axis.

In the embodiment illustrated herein, the rotor 305 may comprise a central support shaft 315, on which two heads 320 that are mutually opposed along the direction of the rotation axis are keyed, and a plurality of connection peripheral bars 325, arranged eccentrically with respect to the rotation axis, the ends of each of which are fixed to the opposite heads 320 (see also Figure 7).

Preferably, each connection bar 325 extends helically with respect to the central shaft 315.

Each of these connection bars 325 carries a plurality of the aforesaid metallic prongs 310, arranged in succession, each of which may be conformed as a bending spring provided with a central portion that is spirally wound around the respective connection bar 325 and two end portions, one portion of which projects radially outwards (defining the prong or claw) and the other portion of which remains constrained to the rotor.

The scarifier roller 300 is preferably installed (rotatably) on board the front frame 115, to the rear with respect to the drive wheels 160.

In particular, the opposite ends of the central shaft 315 may project axially with respect to both heads 320 and may be rotatably supported, preferably by the interposition of bearings, each by a respective support bracket 330.

These support brackets 330, which can be made as metal sheet casings, can be individually fixed, e.g. bolted or welded, below a respective lateral wing 175 to the right or to the left of the central body 155 of the front frame 115, preferably at the free end of the lateral wing 175 itself.

In this way, by varying the inclination of the front frame 115 with respect to the rear frame 120 as explained above, it is advantageously possible to adjust and lock the scarifier roller 300 at different operating positions on the support frame 105, which correspond to different distances (dimensions) with respect to the synthetic grass lawn to be treated.

For example, by manually operating the lever 200, it is possible to lower the scarifier roller 300 (increasing the penetration of the metallic prongs 310) when the synthetic grass is rather high, or raise the scarifier roller 300 (decreasing the penetration of the metallic prongs 310) when the synthetic grass is relatively low.

The rotation of the scarifier roller 300 around its rotation axis is preferably driven by motor means that are installed on board the support frame 105.

These motor means may comprise a motor, preferably the same motor 165 which is also used to drive the traction means (in this case the drive wheels 160), and a transmission system adapted to transmit to the scarifier roller 300 at least a part of the torque supplied by said motor, or to transmit to it the motion generated by it.

Said transmission system may comprise for example a toothed wheel 335 (see Figure 8) coaxially keyed to the rotor 305, for example at one end of its central shaft 315, and a worm screw 340 meshing with said toothed wheel 335.

In particular, the worm screw 340 can be rotatably accommodated in one of the casings that define the support brackets 330, e.g. the one on the left in the embodiment illustrated herein, which can also accommodate and protect the toothed wheel 335.

The transmission system may further comprise a belt transmission for transmitting the rotation of the motor to the worm screw 340.

This belt transmission may comprise a first pulley 345 keyed to one end of the worm screw 340 projecting above the corresponding lateral wing 175; a second pulley 350 keyed on a power take-off 355 (i.e. on a motorised rotating shaft) having a rotation axis parallel to the worm screw 340 and rotatably mounted on the central body 155 of the front frame 115; and finally a belt 360 (e.g., a trapezoidal belt) wound around the first and the second pulley 345 and 350.

In particular, the power take-off 355 can be connected to the motor 165 via a further belt transmission, of which only the pulley 365 keyed on the power take-off 355 itself is visible in the figures.

Although the example illustrated makes use of belt transmissions, it is not excluded that, in other embodiments, these may be replaced by chain, gear transmission or of any other type.

In addition to the scarifier roller 300, the machine 100 can also comprise an oscillating brush 400, which is installed on board the support frame 105 to the rear of the scarifier roller 300 with respect to the advancement direction of the machine 100.

This oscillating brush 400 is adapted to stay in contact with the synthetic grass lawn by making reciprocating movements along a transverse direction of oscillation, i.e. generally parallel to the rotation axis of the scarifier roller 300.

In this way, the oscillating brush 400 performs the function of redistributing the grains of sand and/or rubber and/or other materials that have been lifted by the scarifier roller 300 and allowing them to penetrate back into the synthetic turf, without, however, compacting them excessively among the fibres.

Preferably, the oscillating brush 400 is also connected to the support frame 105 of the machine 100 by adjustment means that allow to adjust and lock the position of the oscillating brush 400 at different operating positions, which correspond to different distances (heights) of the same with respect to the synthetic grass lawn.

For this purpose, the oscillating brush 400 can be installed on a tilting support 405 (see also Figure 5), which is connected to the support frame 105 by means of an articulation system that enables it to rotate around a hinge axis parallel to the rotation axis of the scarifier roller 300 and spaced apart from the oscillating brush 400.

The hinge axis of the tilting support 405 may for example be positioned near the rotation axis of the scarifier roller 300.

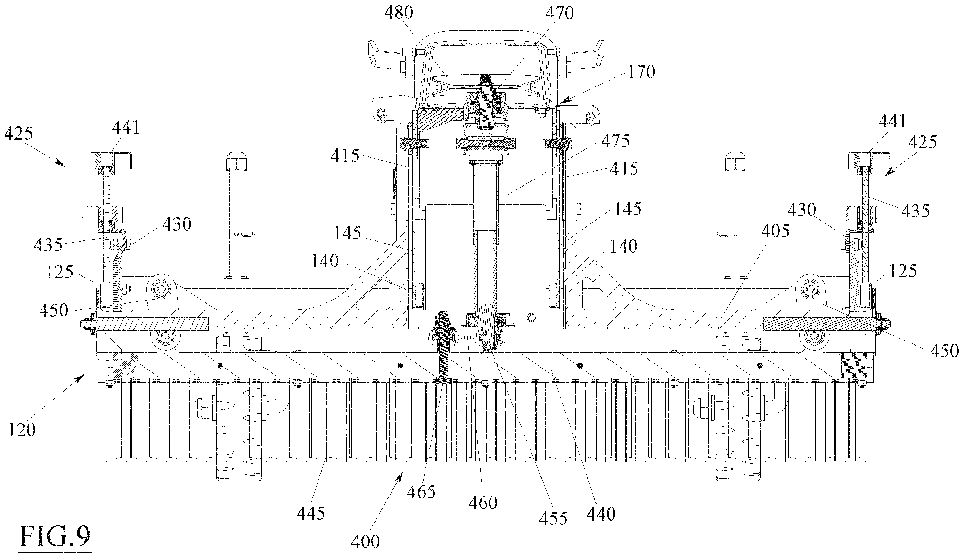

More in detail, the tilting support 405 may be conformed as a rigid cross member that extends predominantly in a transverse direction and that surmounts the oscillating brush 400 (see also Figure 2 and 9).

For example, the tilting support 405 may be made of bent and/or welded metal sheet and may be provided with stiffening ribs.

The articulation system may comprise two arms 410, which are respectively hinged to the opposite left and right ends of the tilting support 405.

These arms 410 protrude, for example with a slightly arched shape, towards the front part of the machine 100, ending with a distal end that is hinged to the support frame 105 according to the already mentioned hinge axis.

Specifically, the distal ends of each arm 410 are individually hinged to a bracket which is fixed (e.g. welded) below the right longitudinal arm 125 and respectively the left longitudinal arm 125 of the rear frame 120.

To guide the vertical displacements of the tilting support 405, the latter can be provided with two abutment plates 415 (see also Figures 10 and 11) that protrude upwards and that lie, mutually opposed and spaced apart, on vertical planes parallel to the advancement direction of the machine 100.

These abutment plates 415 can be inserted, substantially to size, on the shaped plates 205 of the lever 200, so that each shaped plate 205 is interposed between an abutment plate 415 and a containment plate 145 of the rear frame 120.

Each of the abutment plates 415 further comprises a receiving slot 420, preferably rectilinear and extending in a vertical direction, within which the transverse pin 190 is slidably accommodated which is fixed to the adjacent lateral sidewall 180 of the rear end 170 of the front frame 115.

In this way, the transverse pins 190, by sliding in the receiving slots 420, allow the vertical displacements of the tilting support 405 to be guided in the vertical direction.

In this context, the adjustment means for adjusting the position at height of the oscillating brush 400 are adapted to lock the tilting support 405 at multiple different angular positions with respect to the hinge axis defined by the articulation system.

For example, said adjustment means may comprise one or more height-adjustable rest elements 425 (see Figure 9) by means of which the tilting support 405 rests, due to its own weight, on the support frame 105, preferably on the rear frame 120.

In the embodiment illustrated, the adjustment means comprise two of these rest elements 425, which are positioned respectively at the opposite right and left ends of the tilting support 405 and are adapted to rest respectively on the right longitudinal arm 125 and on the left longitudinal arm 125 of the rear frame 120.

Each of these rest elements 425 comprises, for example, a bracket 430, substantially inverted L-shaped, which is fixed to the tilting support 405 and has a horizontal upper flap that vertically surmounts the respective longitudinal arm 125.

Each rest element 425 also comprises a screw 435 with a vertical axis, which is screwed into a threaded through hole formed in the upper edge of the respective bracket 430, such that its lower end projects downward in vertical alignment with the longitudinal arm 125, while the upper end may be provided with a knob 441.

In this way, by screwing or unscrewing the screws 435, it is possible to vary the length of the relative sections that project below the upper flap of the brackets 430, so that the rest on the longitudinal arms 125, and therefore the constraint to the rotation, is achieved for different heights of the tilting support 405 with respect to the synthetic grass lawn.

Returning to the oscillating brush 400, it may comprise a support bar 440, extending predominantly in a transverse direction, and a plurality of flexible bristles 445, for example made of plastic/polymer material, which are fixed in a cantilevered manner to a lower surface of the support bar 440, so as to stay in contact with the synthetic grass lawn. The support bar 440 of the oscillating brush 400 can be carried by the tilting support 405 so as to be adapted to make the required reciprocating displacements in a transverse direction with respect to it.

For example, in the illustrated embodiment, the support bar 440 can be substantially suspended below the tilting support 405 by means of four connecting rods 450 (see Figures 2 and 9), having longitudinally oriented articulation axes, which are placed in pairs respectively at the opposite ends (right and left) of the support bar 440 and of the tilting support 405, so that an articulated parallelogram mechanism is substantially defined with the latter.

However, it is not excluded that, in other embodiments, the articulated parallelogram mechanism can be made with only two end connecting rods 450.

The oscillation of the support bar 440, i.e. of the oscillating brush 400, with respect to the tilting support 405 is preferably driven by motor means that are installed on board the support frame 105.

These motor means comprise a motor, preferably the same motor 165 that is used to drive also the traction means (in this case the drive wheels 160) as well as possibly the scarifier roller 300, and a transmission system adapted to transmit and transform the rotation of said motor into an oscillatory movement of the oscillating brush 400.

Said transmission system may comprise, for example, a crank 455 (see Figures 9 and 10), which is adapted to rotate around a rotation axis orthogonal to the oscillation direction of the oscillating brush 400, e.g. substantially vertical.

Preferably, this crank 455 is rotatably coupled to the tilting support 405, e.g. substantially in the middle of its transverse extension.

The transmission system may further comprise a connecting rod 460, the ends of which are respectively articulated to the crank 455 and to the support bar 440 of the oscillating brush 400, e.g. to a pin 465 fixed to the support bar 440.

The axes of articulation of the connecting rod 460 with the crank 455 and with the oscillating brush 400 are parallel to the rotation axis of the crank 455.

In this way, the connecting rod 460 and the crank 455 define a thrust crank mechanism adapted to transform the rotation of the crank 455 into a reciprocating transverse movement of the oscillating brush 400.

The transmission system may also comprise a rotating shaft 470 and connection members adapted to transmit the rotation of the rotating shaft 470 to the crank 455.

This rotating shaft 470 can be positioned substantially above the crank 455, presenting a rotation axis oriented substantially vertically.

In particular, in the illustrated example, the rotating shaft 470 can be rotatably coupled to the rear end 170 of the front frame 115, in particular to the flap 185.

In order to allow the relative displacements in a vertical direction between the tilting support 405 and the rear end 170 of the front frame 115, without losing the kinematic connection between the rotating shaft 470 and the crank 455, the connection members between these two components may comprise a telescopic bar 475, preferably of the prismatic type, whose lower end is rotatably integral with the crank 455 and the upper end is rotatably integral with the rotating shaft 470.

Finally, the transmission system may comprise a belt transmission for transmitting the rotation of the motor to the rotating shaft 470.

This belt transmission may comprise a first pulley 480 keyed to one end of the rotating shaft 470 projecting above the rear end 170 of the front frame 115; a second pulley 485 keyed on the already mentioned power take-off 355 (see Figure 7); and a belt 490 (e.g., a trapezoidal belt) wound around the first and second pulley 480 and 485.

Although the example illustrated makes use of belt transmissions, it is not excluded that, in other embodiments, these may be replaced by chain, gear transmissions or of any other type.

In addition to the scarifier roller 300 and to the oscillating brush 400, the tools of the machine 100 may also comprise a second brush 500, which is installed on the support frame 105 so as to be adapted to stay in contact with the synthetic grass lawn, at the rear with respect to the previous oscillating brush 400.

The second brush 500 has the function of "combing" the synthetic grass lawn after the latter has been treated with the scarifier roller 300 and with the oscillating brush 400, smoothing it out and helping to evenly distribute the grains of sand and/or other filling material.

Going into further detail, the second brush 500 may also comprise a support bar 505 (see Figure 7), extending predominantly in a transverse direction, and a plurality of flexible bristles 510, for example made of plastic and/or polymer material, which are fixed in a cantilevered manner to a lower surface of the aforesaid support bar 505, so as to stay in contact with the synthetic grass lawn.

The second brush 500 may also be installed on a tilting support 515, conformed for example as a rigid cross member, which is connected to the support frame 105 by means of an articulation system that enables it to rotate around a hinge axis parallel to the rotation axis of the scarifier roller 300 and spaced apart from the second brush 500.

For example, the hinge axis of the tilting support 515 of the second brush 500 may coincide with the hinge axis of the tilting support 405 of the oscillating brush 400. Specifically, the articulation system may comprise two arms 520 (see Fig. 5), which are respectively fixed (e.g. welded or bolted) to the opposite left and right ends of the tilting support 515.

These arms 520 protrude, for example with a slightly arched shape, towards the front part of the machine 100, ending with a distal end that is hinged to the support frame 105, preferably to the rear frame 120, according to the already mentioned hinge axis. Specifically, the distal ends of each arm 520 can be individually hinged to the same brackets to which the arms 410 of the oscillating brush 400 are also hinged.

The arms 520 may be positioned internally with respect to the arms 410 (i.e. contained in the space between the latter) and may have a more arched shape so as to surmount the hinge pins with which the arms 410 are articulated to the tilting support 405.

Unlike the oscillating brush 400, the second brush 500 is firmly fixed to the respective tilting support 515, so that it cannot move with respect to it.

Furthermore, the angular position of the tilting support 515 is not adjustable but is only limited, at the bottom, by the aforesaid hinge pins and, at the top, by the rear frame 120. In this way, during operation of the machine 100, the second brush 500 is adapted to rest freely on the synthetic grass lawn, weighing down on it by its own weight.

The machine 100 can also be provided with a series of controls adapted to activate its various functions.

In particular, the machine 100 may comprise a first control, preferably positioned on the handles 110, which is adapted to switch the motor 165 on or off.

The machine 100 may also comprise a second control, also preferably positioned on the handles 110, which can activate or deactivate the rotation of the power take-off 355 when the motor 165 is running.

The machine 100 may also comprise a third control, preferably positioned on the lever 200, which can activate or deactivate the rotation of the scarifier roller 300 with the power take-off 355 in operation.

Finally, the machine 100 may comprise a fourth control, also preferably positioned on the lever 200, which can activate or deactivate the reciprocating movement of the oscillating brush 400 with the power take-off 355 in operation.

Since in the example illustrated the motion transmission systems are of the belt type, the second, third and fourth control may individually comprise a lever which, for example by means of a cable (e.g. Bowden cable), is able to displace a belt tensioning roller (not shown) between an operational position, in which it tensions the relevant belt (enabling it to transmit motion), and an inactive position, in which it leaves the belt slack (rendering it unable to transmit motion).

Thus, for example, the second control may be adapted to move a belt tensioning roller acting on the belt adapted to connect the motor 165 to the power take-off 355; the third control may be adapted to move a belt tensioning roller acting on the belt 360 adapted to connect the power take-off 355 to the worm screw 340; and the fourth control may be adapted to move a belt tensioning roller acting on the belt 490 adapted to connect the power take-off 355 to the rotating shaft 470.

Finally, the machine 100 may comprise a series of metal and/or plastic casings adapted to cover and protect the various components, especially those in motion.

Obviously, a person skilled in the art will be able to make numerous technicalapplicative modifications to all that above, without thereby departing from the scope of the invention as hereinbelow claimed.

## Claims

1. Machine (100) for decompacting synthetic grass lawns comprising:
- a support frame (105) provided with supporting members (150, 160) adapted to allow said support frame (105) to advance on the lawn in an advancement direction,
- a scarifier roller (300) installed on board the support frame (105), which is adapted to stay in contact with the lawn and is adapted to rotate on itself around a rotation axis that is horizontal and orthogonal to the advancement direction,
- an oscillating brush (400) installed on board the support frame (105), to the rear of the scarifier roller (300) with respect to the advancement direction, which is adapted to stay in contact with the lawn and is adapted to make reciprocating movements along an oscillation direction parallel to the rotation axis of the scarifier roller (300), and
- motor means (165) adapted to actuate the rotation of the scarifier roller (300) and the oscillation of the oscillating brush (400).

2. Machine (100) according to claim 1, wherein the scarifier roller (300) comprises a rotor (305) and a plurality of metallic prongs (310) adapted to stay in contact with the lawn, which are associated with said rotor (305) so as to protrude radially with respect to the rotation axis.

3. Machine (100) according to claim 2, wherein each metallic prong (310) consists of a bending spring.

4. Machine (100) according to any one of the preceding claims, comprising adjustment means adapted to adjust and lock the scarifier roller (300) on the support frame (105) at different operating positions which correspond to different distances of the scarifier roller (300) from the lawn.

5. Machine (100) according to claim 4, wherein the support frame (105) comprises a first rigid frame (115) and a second rigid frame (120), wherein the first rigid frame (115) is adapted to rotate, with respect to the second rigid frame (120), around an articulation axis parallel to the rotation axis of the scarifier roller (300), the scarifier roller (300) being installed on board the first rigid frame (115) and the adjustment means being adapted to produce the rotation of the first rigid frame (115) with respect to the second rigid frame (120) around the aforesaid articulation axis and to lock them at multiple different mutual angular positions.

6. Machine (100) according to claim 5, wherein the articulation axis is defined by the common axis of a pair of mutually coaxial wheels (160), which are mounted on the first rigid frame (115) to support it resting on the lawn.

7. Machine (100) according to claim 5 or 6, wherein the adjustment means comprise a lever (200), which is pivoted to the second rigid frame (120) and is connected to the first rigid frame (115) in a position spaced apart with respect to the articulation axis.

8. Machine (100) according to any one of the preceding claims, comprising adjustment means for adjusting and locking the position of the oscillating brush (400) on the support frame (105) at different operating positions which correspond to different distances of the oscillating brush (400) with respect to the lawn.

9. Machine (100) according to claim 8, wherein the oscillating brush (400) is installed on a tilting support (405), which is connected to the support frame (105) by means of an articulation system (410) that enables it to rotate around a hinge axis parallel to the rotation axis of the scarifier roller (300) and spaced apart from the oscillating brush (400), the adjustment means being adapted to rotate the tilting support (405) with respect to the support frame (105) and to lock it at multiple different angular positions.

10. Machine (100) according to claim 9, wherein the adjustment means comprise one or more brackets (430) that are integral with the tilting support (405), each of which is provided with an upper flap adapted to surmount a portion of the support frame (105), and one or more screws (435), each of which is screwed into a through hole obtained in the upper flap of a respective bracket (430), so as to have a lower end adapted to rest on the underlying portion of the support frame (105).

11. Machine (100) according to claim 9 or 10, wherein the oscillating brush (400) is connected to the tilting support (405) by means of a plurality of connecting rods (450) arranged so as to define an articulated parallelogram mechanism.

12. Machine (100) according to any one of the preceding claims, comprising a second brush (500) installed on board the support frame (105), which is adapted to stay in contact with the lawn rearwardly to the oscillating brush (400) with respect to the advancement direction.

13. Machine (100) according to claim 12, wherein the second brush (500) is installed on a tilting support (515), which is connected to the support frame (105) by means of an articulation system (520) that enables it to rotate around a hinge axis parallel to the rotation axis of the scarifier roller (300) and spaced apart from the second brush (500).

14. Machine (100) according to any one of the preceding claims, wherein the motor means comprise a motor (165) and a transmission system adapted to transmit the motion of said motor (165) both to the scarifier roller (300) and to the oscillating brush (400).

15. Machine (100) according to claim 14, wherein said transmission system comprises a toothed wheel (335) keyed to the scarifier roller (300), a worm screw (340) meshing with the toothed wheel (335), and a mechanism, for example with belt/belts and pulleys, adapted to transmit the rotation of the motor (165) to the worm screw (340).

16. Machine (100) according to claim 14 or 15, wherein said transmission system comprises a thrust crank mechanism, a rotating shaft (470) adapted to rotate a crank (455) of said thrust crank mechanism, and a mechanism, for example with belt/belts and pulleys, adapted to transmit the rotation of the motor (165) to said rotating shaft (470).

17. Machine (100) according to claim 16, wherein the rotating shaft (470) and the crank (455) of the thrust crank mechanism are connected via a telescopic bar (475).

18. Machine (100) according to any one of the preceding claims, comprising motorised traction means adapted to drive the displacement of the support frame (105) on the lawn.

19. Machine (100) according to claim 18, wherein said traction means comprise one or more drive wheels (160) and a motor (165), which is installed on board the support frame (105) and is adapted to rotate said drive wheels (160), and is preferably also adapted to drive the scarifier roller (300) and the oscillating brush (400).

20. Machine (100) according to any one of the preceding claims, comprising one or more handles (110) adapted to allow to guide the support frame (105) on the lawn.

## Patentansprüche

1. Maschine (100) zum Dekompaktieren von Kunstrasen, umfassend:
- einen Tragrahmen (105), der mit Tragelementen (150, 160) versehen ist, die angepasst sind, um es dem Tragrahmen (105) zu ermöglichen, sich auf dem Rasen in einer Vorlaufrichtung zu bewegen,
- eine Vertikutierwalze (300), die an Bord des Tragrahmens (105) installiert ist, die angepasst ist, um in Kontakt mit dem Rasen zu bleiben, und die angepasst ist, um um sich selbst um eine Drehachse zu drehen, die horizontal und orthogonal zu der Vorlaufrichtung ist,
- eine oszillierende Bürste (400), die an Bord des Tragrahmens (105) in Bezug auf die Vorlaufrichtung hinter der Vertikutierwalze (300) installiert ist, die angepasst ist, um in Kontakt mit dem Rasen zu bleiben und angepasst ist, um Hin- und Herbewegungen entlang einer Oszillationsrichtung parallel zu der Drehachse der Vertikutierwalze (300) zu machen, und
- Motoreinrichtungen (165), die angepasst sind, um die Drehung der Vertikutierwalze (300) und die Oszillation der oszillierenden Bürste (400) zu betätigen.

2. Maschine (100) nach Anspruch 1, wobei die Vertikutierwalze (300) einen Rotor (305) und eine Vielzahl von metallischen Zinken (310), die angepasst sind, um mit dem Rasen in Kontakt zu bleiben, und die mit dem Rotor (305) assoziiert sind, um in Bezug auf die Drehachse radial hervorzustehen, umfasst.

3. Maschine (100) nach Anspruch 2, wobei jeder metallische Zinken (310) aus einer Biegefeder besteht.

4. Maschine (100) nach einem der vorherigen Ansprüche, umfassend Einstelleinrichtungen, die angepasst sind, um die Vertikutierwalze (300) an dem Tragrahmen (105) in verschiedenen Betriebsstellungen einzustellen und zu arretieren, die verschiedenen Abständen der Vertikutierwalze (300) von dem Rasen entsprechen.

5. Maschine (100) nach Anspruch 4, wobei der Tragrahmen (105) einen ersten starren Rahmen (115) und einen zweiten starren Rahmen (120) umfasst, wobei der erste starre Rahmen (115) angepasst ist, um in Bezug auf den zweiten starren Rahmen (120) um eine Gelenkachse parallel zu der Drehachse der Vertikutierwalze (300) zu drehen, wobei die Vertikutierwalze (300) an Bord des ersten starren Rahmens (115) installiert ist und die Einstelleinrichtungen angepasst sind, um die Drehung des ersten starren Rahmens (115) in Bezug auf den zweiten starren Rahmen (120) um die vorstehend genannte Gelenkachse zu erzeugen und sie in mehreren verschiedenen gegenseitigen Winkelstellungen zu arretieren.

6. Maschine (100) nach Anspruch 5, wobei die Gelenkachse durch die gemeinsame Achse eines Paars von zueinander koaxialen Rädern (160) definiert ist, die an dem ersten starren Rahmen (115) montiert sind, um ihn aufliegend auf dem Rasen zu tragen.

7. Maschine (100) nach Anspruch 5 oder 6, wobei die Einstelleinrichtungen einen Hebel (200) umfassen, der schwenkbar an dem zweiten starren Rahmen (120) gelagert ist und mit dem ersten starren Rahmen (115) an einer beabstandeten Position in Bezug auf die Gelenkachse verbunden ist.

8. Maschine (100) nach einem der vorherigen Ansprüche, umfassend Einstelleinrichtungen zum Einstellen und Arretieren der Stellung der oszillierenden Bürste (400) an dem Tragrahmen (105) in verschiedenen Betriebsstellungen, die verschiedenen Abständen der oszillierenden Bürste (400) in Bezug auf den Rasen entsprechen.

9. Maschine (100) nach Anspruch 8, wobei die oszillierende Bürste (400) an einem Kippträger (405) angebracht ist, der mit dem Tragrahmen (105) über ein Gelenksystem (410) verbunden ist, das es ihm ermöglicht, um eine Gelenkachse parallel zu der Drehachse der Vertikutierwalze (300) und beabstandet von der oszillierenden Bürste (400) zu drehen, wobei die Einstelleinrichtungen angepasst sind, um den Kippträger (405) in Bezug auf den Tragrahmen (105) zu drehen und in mehreren verschiedenen Winkelstellungen zu arretieren.

10. Maschine (100) nach Anspruch 9, wobei die Einstelleinrichtungen eine oder mehrere Klammern (430) umfassen, die mit dem Kippträger (405) einstückig sind, wovon jede mit einer oberen Klappe versehen ist, die angepasst ist, um einen Abschnitt des Tragrahmens (105) zu überragen, und eine oder mehrere Schrauben (435), wovon jede in ein Durchgangsloch geschraubt ist, das in der oberen Klappe einer jeweiligen Klammer (430) erlangt ist, um ein unteres Ende aufzuweisen, das angepasst ist, um auf dem darunter liegenden Abschnitt des Tragrahmens (105) zu ruhen.

11. Maschine (100) nach Anspruch 9 oder 10, wobei die oszillierende Bürste (400) mittels einer Vielzahl von Verbindungsstangen (450) verbunden ist, die angeordnet sind, um einen gelenkigen Parallelogrammmechanismus zu definieren, mit dem Kippträger (405) verbunden ist.

12. Maschine (100) nach einem der vorherigen Ansprüche, umfassend eine zweite Bürste (500), die an dem Tragrahmen (105) installiert ist, und die angepasst ist, um mit dem Rasen hinter der oszillierenden Bürste (400) in Bezug auf die Vorlaufrichtung in Kontakt zu bleiben.

13. Maschine (100) nach Anspruch 12, wobei die zweite Bürste (500) an einem Kippträger (515) angebracht ist, der mit dem Tragrahmen (105) über ein Gelenksystem (520) verbunden ist, das es ihm ermöglicht, um eine Gelenkachse parallel zu der Drehachse der Vertikutierwalze (300) und beabstandet von der zweiten Bürste (500) zu drehen.

14. Maschine (100) nach einem der vorherigen Ansprüche, wobei die Motoreinrichtungen einen Motor (165) und ein Übertragungssystem, das angepasst ist, um die Bewegung des Motors (165) sowohl auf die Vertikutierwalze (300) als auch auf die oszillierende Bürste (400) zu übertragen, umfassen.

15. Maschine (100) nach Anspruch 14, das Übertragungssystem umfassend ein Zahnrad (335), das mit der Vertikutierwalze (300) eingreift, eine Schnecke (340), die mit dem Zahnrad (335) kämmt, und einen Mechanismus, beispielsweise mit Riemen/Gurten und Riemenscheiben, der angepasst ist, um die Drehung des Motors (165) auf die Schnecke (340) zu übertragen.

16. Maschine (100) nach Anspruch 14 oder 15, das Übertragungssystem umfassend einen Schubkurbelmechanismus, eine Drehwelle (470), die angepasst ist, um eine Kurbel (455) des Schubkurbelmechanismus zu drehen, und einen Mechanismus, beispielsweise mit Riemen/Gurten und Riemenscheiben, der angepasst ist, um die Drehung des Motors (165) auf die Drehwelle (470) zu übertragen.

17. Maschine (100) nach Anspruch 16, wobei die Drehwelle (470) und die Kurbel (455) des Schubkurbelmechanismus über eine Teleskopstange (475) verbunden sind.

18. Maschine (100) nach einem der vorherigen Ansprüche, umfassend motorisierte Zugeinrichtungen, die angepasst sind, um die Verlagerung des Tragrahmens (105) auf dem Rasen anzutreiben.

19. Maschine (100) nach Anspruch 18, wobei die Zugeinrichtungen ein oder mehrere Antriebsräder (160) und einen Motor (165) umfassen, der an Bord des Tragrahmens (105) installiert und angepasst ist, um die Antriebsräder (160) zu drehen, und der vorzugsweise auch angepasst ist, um die Vertikutierwalze (300) und die oszillierende Bürste (400) anzutreiben.

20. Maschine (100) nach einem der vorherigen Ansprüche, umfassend einen oder mehrere Griffe (110), die angepasst sind, um das Führen des Tragrahmens (105) auf dem Rasen zu ermöglichen.

## Revendications

1. Machine (100) destinée au décompactage de pelouses synthétiques comprenant :
- un cadre de support (105) équipé d'éléments de support (150, 160) adaptés pour permettre audit cadre de support (105) d'avancer sur la pelouse dans une direction d'avancement,
- un rouleau scarificateur (300) installé sur le cadre de support (105), et adapté pour rester en contact avec la pelouse et pour tourner sur lui-même autour d'un axe de rotation horizontal et orthogonal à la direction d'avancement,
- une brosse oscillante (400) installée sur le cadre de support (105), à l'arrière du rouleau scarificateur (300) par rapport à la direction d'avancement, qui est adaptée pour rester en contact avec la pelouse et pour effectuer des mouvements alternatifs le long d'une direction d'oscillation parallèle à l'axe de rotation du rouleau scarificateur (300), et
- des moyens moteurs (165) adaptés pour actionner la rotation du rouleau scarificateur (300) et l'oscillation de la brosse oscillante (400).

2. Machine (100) selon la revendication 1, dans laquelle le rouleau scarificateur (300) comprend un rotor (305) et une pluralité de dents métalliques (310) adaptées pour rester en contact avec la pelouse, qui sont associées audit rotor (305) de manière à faire saillie radialement par rapport à l'axe de rotation.

3. Machine (100) selon la revendication 2, dans laquelle la dent métallique (310) est constituée d'un ressort de flexion.

4. Machine (100) selon l'une quelconque des revendications précédentes, comprenant des moyens de réglage adaptés pour ajuster et verrouiller le rouleau scarificateur (300) sur le cadre de support (105) à différentes positions de fonctionnement qui correspondent à différentes distances du rouleau scarificateur (300) par rapport à la pelouse.

5. Machine (100) selon la revendication 4, dans laquelle le cadre de support (105) comprend un premier cadre rigide (115) et un deuxième cadre rigide (120), dans laquelle le premier cadre rigide (115) est adapté pour tourner, par rapport au deuxième cadre rigide (120), autour d'un axe d'articulation parallèle à l'axe de rotation du rouleau scarificateur (300), le rouleau scarificateur (300) étant installé à bord du premier cadre rigide (115) et les moyens de réglage étant adaptés pour produire la rotation du premier cadre rigide (115) par rapport au deuxième cadre rigide (120) autour de l'axe d'articulation susmentionné et pour les bloquer à de multiples positions angulaires mutuelles différentes.

6. Machine (100) selon la revendication 5, dans laquelle l'axe d'articulation est défini par l'axe commun d'une paire de roues mutuellement coaxiales (160), qui sont montées sur le premier cadre rigide (115) pour le soutenir en appui sur la pelouse.

7. Machine (100) selon la revendication 5 ou 6, dans laquelle les moyens de réglage comprennent un levier (200), qui est pivoté sur le deuxième cadre rigide (120) et connecté au premier cadre rigide (115) dans une position espacée par rapport à l'axe d'articulation.

8. Machine (100) selon l'une quelconque des revendications précédentes, comprenant des moyens de réglage permettant d'ajuster et de verrouiller la position de la brosse oscillante (400) sur le châssis de support (105) à différentes positions de fonctionnement qui correspondent à différentes distances de la brosse oscillante (400) par rapport à la pelouse.

9. Machine (100) selon la revendication 8, dans laquelle la brosse oscillante (400) est installée sur un support pivotant (405), qui est relié au cadre de support (105) au moyen d'un système d'articulation (410) qui lui permet de tourner autour d'un axe d'articulation parallèle à l'axe de rotation du rouleau scarificateur (300) et espacé de la brosse oscillante (400), les moyens de réglage étant adaptés pour faire tourner le support pivotant (405) par rapport au cadre de support (105) et pour le bloquer à de multiples positions angulaires différentes.

10. Machine (100) selon la revendication 9, dans laquelle les moyens de réglage comprennent une ou plusieurs équerres (430) faisant partie intégrante du support pivotant (405), dont chacune est pourvue d'un volet supérieur adapté pour surmonter une partie du cadre de support (105), et une ou plusieurs vis (435), dont chacune est vissée dans un trou débouchant obtenu dans le volet supérieur d'une équerre respective (430), de manière à avoir une extrémité inférieure adaptée pour reposer sur la partie sous-jacente du cadre de support (105).

11. Machine (100) selon la revendication 9 ou 10, dans laquelle la brosse oscillante (400) est connectée au support pivotant (405) au moyen d'une pluralité de bielles (450) disposées de manière à définir un mécanisme de parallélogramme articulé.

12. Machine (100) selon l'une quelconque des revendications précédentes, comprenant une deuxième brosse (500) montée à bord du cadre de support (105) et adaptée pour rester en contact avec la pelouse à l'arrière de la brosse oscillante (400) par rapport à la direction d'avancement.

13. Machine (100) selon la revendication 12, dans laquelle la deuxième brosse (500) est installée sur un support pivotant (515), qui est relié au cadre de support (105) au moyen d'un système d'articulation (520) qui lui permet de tourner autour d'un axe d'articulation parallèle à l'axe de rotation du rouleau scarificateur (300) et espacé de la deuxième brosse (500).

14. Machine (100) selon l'une quelconque des revendications précédentes, dans laquelle les moyens moteurs comprennent un moteur (165) et un système de transmission adapté pour transmettre le mouvement dudit moteur (165) à la fois au rouleau scarificateur (300) et à la brosse oscillante (400).

15. Machine (100) selon la revendication 14, dans laquelle ledit système de transmission comprend une roue dentée (335) clavetée au rouleau scarificateur (300), une vis sans fin (340) engrenant avec la roue dentée (335), et un mécanisme, par exemple avec des courroies et des poulies, adapté pour transmettre la rotation du moteur (165) à la vis sans fin (340).

16. Machine (100) selon la revendication 14 ou 15, dans laquelle ledit système de transmission comprend un mécanisme à manivelle de poussée, un arbre rotatif (470) adapté pour faire tourner une manivelle (455) dudit mécanisme à manivelle de poussée, et un mécanisme, par exemple avec des courroies et des poulies, adapté pour transmettre la rotation du moteur (165) audit arbre rotatif (470).

17. Machine (100) selon la revendication 16, dans laquelle l'arbre rotatif (470) et la manivelle (455) du mécanisme à manivelle de poussée sont reliés par une barre télescopique (475).

18. Machine (100) selon l'une quelconque des revendications précédentes, comprenant des moyens de traction motorisés adaptés pour entraîner le déplacement du cadre support (105) sur la pelouse.

19. Machine (100) selon la revendication 18, dans laquelle lesdits moyens de traction comprennent une ou plusieurs roues motrices (160) et un moteur (165), qui est installé à bord du cadre de support (105) et adapté pour faire tourner lesdites roues motrices (160), et de préférence également adapté pour entraîner le rouleau scarificateur (300) et la brosse oscillante (400).

20. Machine (100) selon l'une quelconque des revendications précédentes, comprenant une ou plusieurs poignées (110) adaptées pour permettre de guider le cadre de support (105) sur la pelouse.
